Europäisches Patentamt

European Patent Office

Office européen des brevets

(19)

(11) **EP 0 822 102 B1**

(12) **EUROPEAN PATENT SPECIFICATION**

(45) Date of publication and mention
of the grant of the patent:
**30.07.2003 Bulletin 2003/31**

(51) Int Cl.7: **B60B 17/00**

(21) Application number: **97500103.3**

(22) Date of filing: **09.06.1997**

(54) **Noise damping system on railroad wheels**

Eisenbahnräder mit Schalldämpfungsvorrichtung

Roues de chemin de fer avec système d'amortissement du bruit

(84) Designated Contracting States:
**AT BE CH DE DK FR GB IT LI NL PT SE**

(30) Priority: **31.07.1996 ES 9601704**

(43) Date of publication of application:
**04.02.1998 Bulletin 1998/06**

(73) Proprietor: **Construcciones y Auxiliar de Ferrocarriles S.A. CAF.
20200 Beasain (Guipuzcoa) (ES)**

(72) Inventors:
 • **Castanares Etxezarreta, Aitor
  20700 Urretxu (Guipuzcoa) (ES)**
 • **Arriola Trueba, Victor
  20008 Donostia (Guipuzcoa) (ES)**
 • **Arteaga Galarraga, Juan
  20011 Donostia (Guipuzcoa) (ES)**
 • **Gimenez Ortiz, German
  20009 Donostia (Guipuzcoa) (ES)**

(74) Representative:
 **Hernandez Covarrubias, Arturo et al
 c/o Clarke, Modet & Co.,
 Goya, 11
 28001 Madrid (ES)**

(56) References cited:
 **EP-A- 0 050 567      DE-A- 19 542 342
 DE-C- 833 362        US-A- 4 254 985
 US-A- 5 386 894**

## Description

The present invention refers to a damping system for the noise produced by railroad wheels, during the traffic of railroad vehicles.

Already known are the devices intended for the reduction of noise produced by railroad wheels, which may be grouped under the following types:

- Resilient wheels: on said wheels, the rim of the same is constituted by a bandage joined to the rest of the wheel by means of elastic elements.
- Damped wheels: wheels on which dampers are added by means of external elements: a) by viscoelastic elements, such as foils and rubber elements, adherred to the wheel and tuned for different frequencies, and b) by friction, such as elements joined to the wheel, which cause relative slippage as regards the surface of the wheel, producing a friction which provides damping.

It is precisely in this latter subgroup, where the object of the invention is to be found.

In the case of noise damping by means of friction, the use is known of a circular sectioned ring, tied down in a groove with semicircular section performed on the inner part of the wheel rim. However, in this arrangement, no elements exist which permit the control of the uniformity of contact and the circunferential torque. Besides, the assembly process induces the existence of differences in the contact between different points. On the other hand, said arrangement provides little mass for a specific width of the groove or channel, movement of rigid solids may be produced, and it is impossible to displace the channel up to the flat external surface of the rim.

DE-A-833 362 discloses a noise damping system in railroad wheels according to the preamble of claim 1.

The applicant has conducted researches on the damping systems by means of friction, having confirmed that three main parameters exist for the efficacy of noise damping: a) ring mass; b) optimization of the contact area between ring and wheel; and c) position of the ring as regards the wheel rim.

In relation to said first parameter, ring mass, it has been confirmed that on increase of the ring mass (the mass-ring/mass-wheel relation increases) an increase in the damping of the system is produced, due to which its efficacy improves (both in average and in high frequency). It is therefore interesting to increase as much as possible the mass of the ring.

For a specific width in the groove or channel where the ring is housed, it is advisable that the shape of the ring offer the greatest possible mass.

As regards said second parameter, it has been confirmed that the contact area between the surfaces of the ring and of the wheel constitutes another main parameter of the system, since, ultimately, the noise damping mechanism is based on the friction produced in the contact between the two surfaces by microslippage between the same. The slipping work depends on:

$$( W = \mu.N.l.):$$

where $\mu$ is the friction coefficient, N the normal load between the surfaces and l the relative slippage between both surfaces.

Given a coefficient $\mu$, on increase of the normal load between the surface, the work of the friction may increase (N increases) though however, the possibility of movement is made more difficult (could decrease l). In consequence, a solution of compromise exists in which, for a specific torque between the surfaces, an optimum exists in the work of the friction.

On the other hand, it is important to achieve besides a specific torque, a uniformity in the contact area between ring and wheel. A non uniform contact produces the existence of zones which work adequately and zones which do not work (even with lack of contact); including the possibility of movement of the rigid solid of the ring as regards the wheel, according to which, the system would work in a totally different manner. All this causes a decrease in the global efficacy and possible dispersions of the results.

Finally, in relation with said third parameter, position of the ring as regards the wheel rim, the researches carried out show that between the different positions of a possible damping ring, within the width of the wheel rim, the end positions (removed from the half plane, perpendicular to the wheel axis) are more efficient and, particularly, the inner side of the wheel (side of the flange) is slightly more favourable.

Based on the previous considerations, in compliance with the present invention, a noise damping system according to claim 1 is developed.

The system which is the object of the invention permits the maximum use of the three main previously indicated parameters, on the contrary to what occurs with other traditional noise damping elements.

Experimentally, it has been confirmed that under radial/axial impacts, the currently known systems attain an attenuation of the noise (dBA) of up to 9 dBA, whilst, with the system which is the object of the invention, attenuations of up to 13 dBA may be achieved.

The system which is the object of the invention, presents the following main characteristics:

- Arrangement of the ring, which is tied down in a housing performed on the end of the wheel rim.
- Consists of a torque system or controlled contact between the ring and the rim, which may be achieved by means of through-screws passing through the rim, or by means of a fit.
- Shape of the ring, with a cross section of straight sides, having a trapezoidal cross section, optimizing the mass of the same.

- A preferably whole ring, of one piece, though it may be divided into two or more parts by means of transversal cuts to facilitate its assembly.
- Ring assembly on the inner side of the rim, on the outer side or on both simultaneously.

The characteristics and advantages of the system of the invention is hereby described in greater detail, with the help of the enclosed drawings, in which a possible embodiment is represented, given as non restrictive example.

In the drawings:

Figure 1 is an end section of a wheel rim which includes a ring according to the system of the invention.

Figure 2 is a similar section to figure 1, representing a variant of the embodiment which is not claimed but included for only for the purpose of giving information to the reader.

Figure 3 is an axial view of the ring which represents the possible location of the torque screws as well as the cutting option for the ring, to facilitate the assembly.

Figures 4 and 5 correspond to details which represent two possible forms of joining or meeting of the sections which form the ring of figure 3.

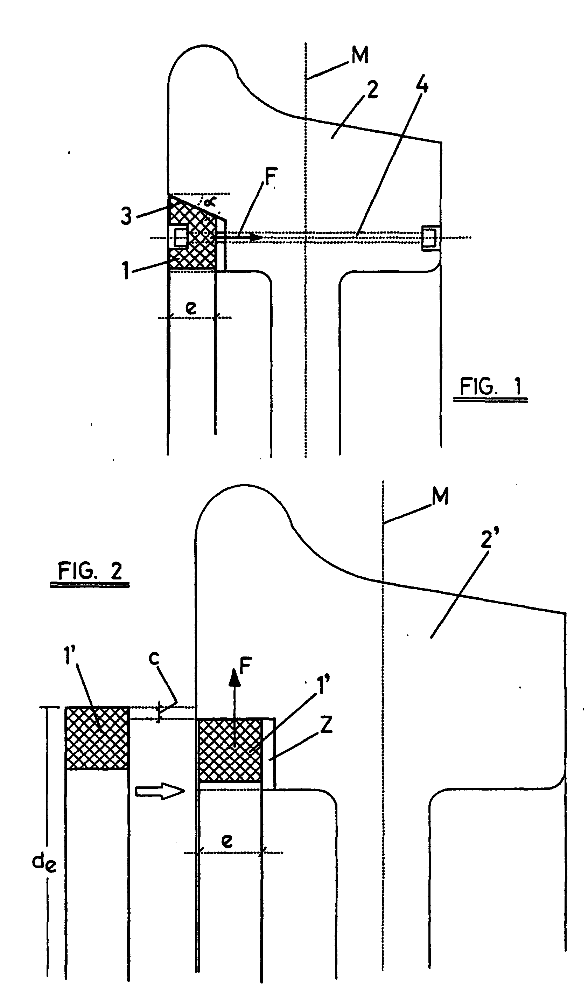

Figure 1 shows a ring 1 assembled on the groove performed on a rim 2 of a railroad wheel, starting from the innner side of said wheel.

With said constitution, for a given width "e", the shape of ring 1 permits the attainment of the maximum mass. Other possible shapes of the ring section, as for example circular, offer less area (less mass), for equal width "e". Thus, the optimizing of the first parameter which intervenes in the efficacy of the absorption of noise, is attained.

The sloped surface 3 of the trapezoidal section of ring 1, which forms the alpha angle, permits that the contact between ring 1 and rim 2 be circumferencially uniform. By means of the necessary machining, ring 1 may be provided with adequate surface quality and tolerances, ensuring a perfect contact with rim 2 of the wheel.

As may be observed in figure 1, ring 1 is related to the wheel by means of torque elements constituted by through-screws 4. Force F, provided by said screws, which is variable by means of adjustment of the torque of the same, together with the aforementioned alpha angle, improves the contact between ring 1 and the mortise or channel performed on rim 2 of the wheel, varying the contact forces between both surfaces as the torque of screws 4 varies.

For a given wheel and ring, an optimum torque exists on screws 4, depending on the alpha angle, to provide a maximum damping to the wheel. The optimum torque shall be defined for each case.

In this manner an improvement of the second parameter which intervenes in the efficacy of the noise absorption is attained, as is the optimization on the contact surface between ring and wheel.

As is observed in figure 1, ring 1 occupies the most removed position possible on the half plane M of the wheel, perpendicular to the axis of the same, thus attaining the optimization of the aforementioned third parameter which intervenes in the efficacy of the noise absorption.

The described arrangements, with reference to figures 1 and 2, compel the ring to be always positioned starting from the side surfaces of the wheel rim (inner or outer), which is preferable from the point of view of the reduction of acoustic emission.

In figure 2, which relates to an embodiment which is not within the scope of the claims but included only for the purpose of giving information to the reader, ring 1' has a rectangular section, with an outer diameter (de) over the diameter of the housing-mortise performed on rim 2' of the wheel, due to which, an interference fit (c) is produced.

By means of a conventional method, for example, heat dilations/shrinkings, ring 1' is inserted in the housing, the fit pressure and the preload between ring 1' and rim 2' of the wheel, remaining set by said interference fit.

The solutions offered to the variants of figures 1 and 2 may be combined. In both cases it is observed that a zone (z) without contact, may exist in the housing-mortise of the rim, between the confronted sides of the ring and rim.

The shape of ring 1 and tie-down 4 allows that the outer dimensions of the wheel with the ring be the same as in the original wheel, making possible that any other element which the wheel may be capable of carrying be assembled, such as brake discs etc.

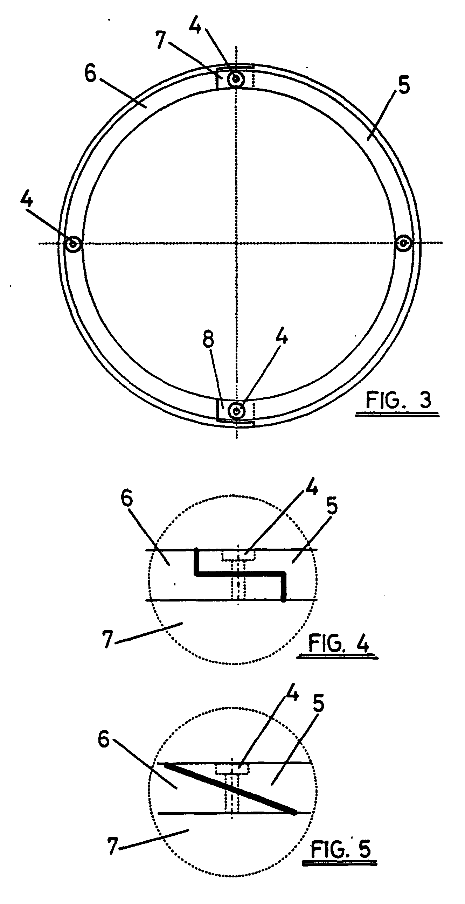

Ring 1 is placed at an end of the rim 2 of the wheel, which may be the inner side, as in figure 1, on the outer side, or on both sides. The ring must be manufactured with adequate tolerances and may be whole or divided in two halves for its easy assembly and disassembly on the assembled axis wheel, already in service, such as is shown in figures 3 through 5.

In the case of a divided ring, the tie-down system between the two halves 5 and 6 may be carried out in the manner indicated in figures 3 and 4.

The ring is cut at points 7 and 8, coinciding with two of the torque screws 4, by means of a cut which may adopt the shape shown in figures 4 or 5. In both cases overlapped sections exist, which may be joined to each other by means of one of the torque screws 4.

## Claims

1. Noise damping system in railroad wheels, by means of the assembly of a ring in a groove formed on at least one of the ends of the rim (2) of the wheel, the groove and ring (1) having cross sections limited by straight sides, said groove being performed starting from at least one of the inner or outer sides of the rim (2) of the wheel; **characterized in that** the ring (1) and the groove have a trapezoidal cross section and **in that** the ring and groove are related to each other by means of screws (4) parallel to the wheel axis, which pass through the ring (1) and the rim (2) of said wheel.

2. System according to any of the preceding claims, **characterized in that** ring (1) is assembled on the groove with a preset preload against one of the groove walls.

3. System according to any of the preceding claims, **characterized in that** one of the ring sides (1) does not contact the parallel side of the groove of the rim (2).

4. System according to any of the preceding claims, **characterized in that** rim (1) is transversally subdivided in at least two sections (5,6) connectable to each other.

## Patentansprüche

1. Lärmdämpfende Anordnung in Eisenbahnrädern mittels Anbringung eines Rings in einer an mindestens einem der Enden des Rands (2) des Rads ausgebildeten Nut, wobei die Nut und der Ring (1) durch gerade Seiten begrenzte Querschnitte aufweisen, die Nut beginnend von mindestens einer der inneren oder äußeren Seiten des Rands (2) des Rads ausgeführt wird; **dadurch gekennzeichnet, dass** der Ring (1) und die Nut einen trapezförmigen Querschnitt aufweisen und der Ring und die Nut mittels Schrauben (4) parallel zur Radachse mit einander in Beziehung stehen, welche durch den Ring (1) und den Rand (2) des Rads durchgehen.

2. Anordnung nach einem der vorstehenden Ansprüche, **dadurch gekennzeichnet, dass** der Ring (1) an der Nut mit einer vorbestimmten Vorlast gegen eine der Nutwände angebracht ist.

3. Anordnung nach einem der vorstehenden Ansprüche, **dadurch gekennzeichnet, dass** eine der Ringseiten (1) nicht die parallele Seite der Nut des Rands (2) berührt.

4. Anordnung nach einem der vorstehenden Ansprüche, **dadurch gekennzeichnet, dass** der Rand (1) in Querrichtung in mindestens zwei mit einander verbindbare Abschnitte (5, 6) unterteilt ist.

## Revendications

1. Système d'insonorisation dans des roues de véhicule ferroviaire, au moyen du montage d'un anneau dans une gorge formée sur au moins une des extrémités de la jante (2) de la roue, la gorge et l'anneau (1) présentant des sections transversales limitées par des côtés droits, ladite gorge étant réalisée en commençant à partir d'au moins un des côtés intérieur ou extérieur de la jante (2) de la roue ; **caractérisé en ce que** l'anneau (1) et la gorge présentent une section transversale trapézoïdale et **en ce que** l'anneau et la gorge sont associés l'un à l'autre au moyen de vis (4) parallèles à l'axe de la roue, qui traversent l'anneau (1) et la jante (2) de ladite roue.

2. Système selon l'une quelconque des revendications précédentes, **caractérisé en ce que** l'anneau (1) est monté sur la gorge avec une précontrainte préétablie contre l'une des parois de la gorge.

3. Système selon l'une quelconque des revendications précédentes, **caractérisé en ce que** l'un des côtés de l'anneau (1) ne contacte pas le côté parallèle de la gorge de la jante (2).

4. Système selon l'une quelconque des revendications précédentes, **caractérisé en ce que** l'anneau (1) est subdivisé transversalement en au moins deux sections (5, 6) pouvant être raccordées l'une à l'autre.

FIG. 1

FIG. 2

FIG. 3

FIG. 4

FIG. 5